# EUROPEAN PATENT APPLICATION

(11) **EP 2 535 243 A2**
(43) Date of publication of application: **19.12.2012**
(21) Application number: 12171651.8
(22) Date of filing: 12.06.2012
(51) Int. Cl.: B62D 25/12, B62D 25/08

(54) **Engine protection system relative to a filler cap**

(30) Priority: 14.06.2011 GB 201109903
(71) Applicant: Nissan Motor Manufacturing (UK) Ltd., Cranfield Bedfordshire MK43 0DB (GB)
(72) Inventor: Kinch, Tim, Cranfield, Bedfordshire MK430DB (GB); Strachan, Kenneth, Cranfield, Bedfordshire MK430DB (GB)

(57) **Abstract**

Engine protection system comprises a holder 160 for a filler cap 21, accessible through an open engine maintenance panel such as a vehicle bonnet 110. Holder 160 has a cover 152 discrete from said maintenance panel. Cover 152 has at least two discrete operating positions, comprising a bonnet closing position 152B (Fig. 4a) and a filler cap holding position 152C (Fig. 4b). Bonnet 110 is prevented from closing while filler cap 21 is located in holder 160. The system may comprise a bonnet catch assembly and a dipstick holder . Sensor(s) may be provided to deliver remote warnings that the cap and/or dipstick are not in the engine. The engine may be prevented from starting until the cap and/or dipstick are replaced. Holder 160 may be deformable to minimize injuries to pedestrians.

## Description

### Field of the invention.

The invention is concerned with an engine protection system arranged to deter an operator from starting an engine when a filler cap, and optionally a dipstick, is not in place on the engine; particularly during regular engine maintenance and inspection. Aspects of the invention relate to a system, to an engine, and to a vehicle.

### Background of the invention.

Many modern engines, particularly internal combustion engines fitted to vehicles such as passenger cars, are covered by plastic engine covers arranged to attenuate engine noise; and to enhance the appearance of the engine-bay, which might otherwise appear unsightly to the user. However, a known problem associated with such engine covers is that their upper surface is often not suitable for resting items such as tools or a filler cap during regular engine maintenance. If the user attempts, for example, to rest an oil filler cap on the engine cover whilst checking the oil level, the filler cap may easily fall onto the ground, resulting in contamination, damage, or even loss of the filler cap. If the user cannot find a suitable place to rest such a cap whilst checking the oil level, the user may choose to rest the cap elsewhere in the engine bay; which may be inappropriate if the filler cap is exposed to contaminants such as dirt or water. Introduction of such contaminants into the engine, transmission or fuel system may be detrimental to engine and vehicle systems, and may potentially cause permanent damage thereto. Similar problems arise if a vehicle user or mechanic wishes to find a temporary resting place for a dipstick.

Another potential problem that may arise during vehicle maintenance is that the user may forget to replace a filler cap before starting or even driving the vehicle. This could potentially lead to the loss of oil or other fluids and/or the ingress of contaminants into sensitive vehicle systems, which could cause inconvenience to the user; and could also potentially cause permanent damage to the vehicle. Several attempts have been made to address some of the above issues. It is known to tether an oil filler cap to an engine; and alternatively to provide a recess in an engine cover panel to accommodate a filler cap. But neither of these concepts offer any facility to remind the user to replace such a cap; nor do they stop the user starting the engine without the cap being in place. It is also known to provide a warning to a vehicle user that an oil filler cap is missing from the engine, but without providing a location in which to store said cap during maintenance. In all of these cases, a user may finish work on the engine, perhaps change his or her clothes, then at least attempt to start the engine, without realizing that there is any potential problem in doing so.

It is against this background that the present invention has been conceived. The present invention seeks to address these problems by preventing the user from even closing the engine cover unless the filler cap has been removed from its holder to be replaced on the engine.

Embodiments of the invention may provide remote visible and/or audible warnings that the filler cap has not been replaced, and may also prevent starting of the engine. Other aims and advantages of the invention will become apparent from the following description, claims and drawings.

### Summary of the invention.

Aspects of the invention therefore provide an engine protection system, an engine, and a vehicle as claimed in the appended claims.

According to an aspect of the present invention for which protection is sought, there is provided an engine protection system comprising a holder for an engine filler cap; said holder being accessible through an engine maintenance panel or hatch which is opened for maintenance and closed for engine running; said holder having a cover discrete from said panel or hatch; said holder cover having at least two discrete operating positions comprising a filler cap holding position and a panel or hatch closing position; wherein the panel or hatch is prevented from closing while the filler cap is located in said holder.

It may be feasible to open the engine maintenance hatch or panel while the engine is running, but only for inspection or diagnosis - this would not be standard practice, particularly while a vehicle fitted with the engine is in motion.

In an example, said filler cap is prevented from being located in the cap holder when said holder cover is located in the panel or hatch closing position.

In an example, said engine maintenance panel or hatch is a vehicle bonnet or engine cover. In an alternative example, said engine maintenance panel or hatch is an additional panel, discrete from a separate vehicle bonnet or engine cover.

In an example, the system comprises a bonnet catch assembly.

In an example, the system comprises an engine cover with a sensor mounted therein; and the filler cap also comprises a sensor, the sensors operating in combination to provide a warning signal when said filler cap is not located in said engine cover.

In an example, the system further comprises a holder for an engine dipstick. In a further example, the system comprises an engine cover with a location for insertion of a dipstick, with a sensor mounted therein; and the dipstick also comprises a sensor, the sensors operating in combination to provide a warning signal when the dipstick is not located in said engine cover.

In an example, the system further comprises a remote operator display panel which provides a visible and/or audible warning when signal(s) indicate that the filler cap and/or dipstick are not located on or in the engine. In a further example, the system comprises a starter motor interrupt circuit, so that a starter motor for an engine protected by said system is not permitted to activate when signal(s) indicate that the filler cap and/or dipstick are not located on or in the engine.

For clarity, it should be stated that in this context, the filler cap being located "on" the engine means that it is affixed to an upper surface of the engine, sealing the oil filler hole thereon; rather than simply being placed on top of the engine for storage. Likewise, the dipstick being located "in" the engine means that it is inserted into its normal "engine running" position, so that the hole in the engine into which said dipstick fits is functionally sealed, effectively preventing oil loss.

In an example, said holder cover is made of metal. In an alternative example, said holder cover is at least partly made of plastic, said plastic part being readily replaceable.

In an example, the filler cap holder is arranged so that the filler cap is held at substantially the same orientation as when it is located on the engine.

In a further example, the dipstick holder, where fitted, is arranged so that the dipstick is held at substantially the same orientation as when it is located in the engine.

In an example, the system further comprises a filler cap having a handle portion and a plugging member, the holder comprising a generally cup-like depression arranged to support the handle portion so as to prevent contact between the holder and said plugging member.

According to another aspect of the present invention for which protection is sought, there is provided an engine fitted with an engine protection system according to any preceding paragraph.

According to another aspect of the present invention for which protection is sought, there is provided a vehicle fitted with an engine according to the preceding paragraph.

In an example, the vehicle filler cap holder and where fitted, the dipstick holder, is/are arranged to deform in the event of a vehicle collision.

Advantageously, the cap holder of the present invention is intended to provide the user with a designated place to set a filler cap down when removed from whatever opening said filler cap is intended to close. This may be during routine maintenance such as an oil-change. The present invention is arranged so as to ensure that the filler cap, when in the designated place, is retained so as to avoid exposure to contaminants such as dirt or water. Where a step is provided within a cup-like depression in said cap holder, the step provides a surface on which a surface of the handle portion may be supported so that the plugging member need not contact another surface, mitigating the risk of contamination by direct contact with another surface before the filler cap is replaced by the user.

The sidewalls of the cup-like depression may further comprise at least two substantially cylindrical sections aligned concentrically, with a first cylindrical section defining an opening to the cup-like depression, the opening being arranged to accommodate at least a portion of the handle portion of the filler cap and a second cylindrical section extending from the first cylindrical section and distal from the opening, wherein the diameter of the first cylindrical section is greater than that of the second cylindrical section, and the difference between the diameters defines a step arranged to support the handle portion of the filler cap.

The sidewalls of the cup-like depression defining the first cylindrical section may taper such that the diameter at the opening is larger than the diameter at the step; while the taper is arranged to cooperate with at least a portion of said handle portion so as to centre the filler cap within the cup-like depression when the cap is inserted therein.

Advantageously, by tapering the first cylindrical section so as to reduce in diameter from the opening to the step, the tapering sidewalls may naturally urge the filler cap towards a co-axial orientation within the cup-like depression. This arrangement ensures that the plugging member is held away from the sidewalls of the second cylindrical section.

The holder may further comprise a through-hole distal from the opening of the cup-like depression arranged to provide drainage for the depression and to prevent said depression from holding a liquid residue.

Advantageously, the provision of a drainage hole in or near the base of the depression permits the vehicle manufacturer to use the holder of the present invention in a location that may be exposed to the elements without the risk that contaminants such as rainwater may enter and fill the depression. Such contaminants may have an adverse affect on the filler cap; and may cause significant damage to the engine which the filler cap is intended to seal.

The holder may further comprise a locally weakened region arranged to permit deformation of the cup-like depression when a substantially axial or vertical load is applied thereto.

Advantageously, the holder may be arranged such that the strength of the sidewalls of the cup-like depression is tuned to provide an energy absorbing structure. This may be particularly advantageous if the holder is located directly above an engine in a vehicle engine bay in the event of an impact with a pedestrian. Deformation of the cup-like depression in this manner will absorb energy and may be tuned to mitigate pedestrian injury.

The holder may further comprise sensor means arranged to detect the presence of a filler cap placed into the cup-like depression of the holder.

Advantageously, a holder arranged to be able to detect when a filler cap has been inserted therein or placed thereon facilitates additional functionality, in particular for an engine on or in which the holder is situated. This feature may be employed to make the holder of the present invention part of a safety system rather than just being regarded as a cosmetic feature or a convenience item.

Advantageously, the engine comprises any one of: a motor vehicle engine; an engine driving a generator; or an engine driving a pump. The signal generated by the control means may be arranged to interrupt operation of said engine until the filler cap has been removed from the cup-like depression and replaced on the engine.

Within the scope of this application it is envisaged that the various aspects, embodiments, examples, features and alternatives set out in the preceding paragraphs, in the claims and/or in the following description and drawings may be taken independently or in any combination thereof. In particular, features described in connection with one embodiment are applicable to the other embodiment, except where there is an incompatibility of features.

### Brief Description of the Drawings

The present invention will now be described, by way of example only, with reference to the accompanying drawings in which:
Figure 1 shows a view from above and in front of a typical passenger car engine bay;
Figure 2 shows a schematic front angled view of a passenger car with its bonnet open;
Figure 3 shows a schematic front angled view of a slam panel and bonnet catch platform incorporating a cap holder according to the invention;
Figure 4a shows a schematic part-sectional view from in front of a vehicle, of a slam panel incorporating a cap holder according to the invention, with the cap holder in its panel or hatch closing position;
Figure 4b shows a similar view to Figure 4a, with the cap holder in its filler cap holding position;
Figure 4c shows a similar view to Figure 4b, with the cap holder in an intermediate position;
Figure 5 shows a schematic part-sectional view from in front of a vehicle, of a slam panel incorporating a cap holder according to the invention;
Figure 6 shows a schematic rearward view of a bonnet catch mechanism in its "bonnet open" condition, with the cap holder cover blocking closing of the bonnet;
Figure 7 shows a schematic rearward view of a bonnet catch mechanism in its "bonnet closed" condition; and
Figure 8 shows a schematic part-sectional view from in front of a vehicle, of a filler cap located in an engine cover which is integrated into a system according to the present invention.

While the examples given for suitable applications for the present invention relate to a filler cap holder integrated into an engine compartment of a motor vehicle, it will be appreciated by one skilled in the art that the cap holder of the present invention may be suitable for use in other applications, such as locomotives, rail power cars, powered water craft, aircraft, generator sets, pump sets, agricultural vehicles, and other engine-driven industrial, military, or emergency equipment.

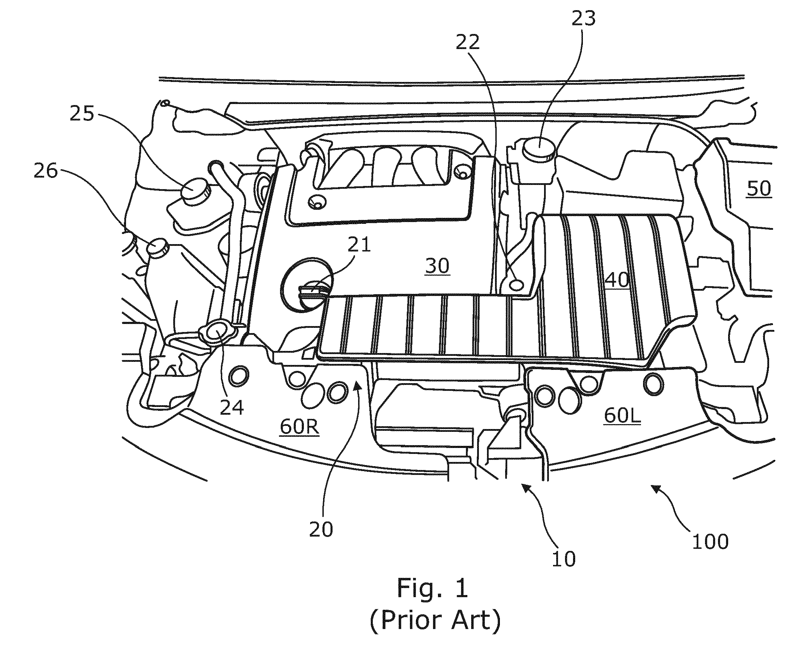

Figure 1 shows a view from above (a "mechanic's eye view") of a typical engine bay 10 of a vehicle - in this case, a passenger car, generally indicated at 100 - with the bonnet (not shown in this Figure) raised to an open position to afford a view of the engine bay. Engine bay 10 accommodates an internal combustion engine generally indicated at 20, and covered at least in part by a trim element 30 formed from a plastic moulded part. Also visible in the Figure are a secondary trim element 40, a battery or fuse-box cover 50, and a two-part radiator shroud 60L, 60R; all of which are also typically formed from plastic moulded parts.

Due to airflow management, styling and aesthetic requirements imposed on the shapes and overall appearance of the trim elements 30, 40, the battery or fuse-box cover 50, and the radiator shrouds 60, there are often no horizontal surfaces on which a user may rest a filler cap during regular vehicle inspection or maintenance, even if the vehicle 100 is parked on flat ground. A professional workshop may employ a metallic tray which may be secured to the body of the vehicle 100 by means of a magnetic base. In use, the tray is placed on a conveniently located body panel and is securely held in place by attraction of the integrated magnet to the vehicle. Items such as filler caps may then be temporarily held in the tray during the maintenance procedure. However, such trays are typically only used in professional workshops and garages; and are not provided with the vehicle 100 due to cost, weight and packaging constraints.

**Figure 1** shows numerous examples of filler caps which may be removed in order to check fluid levels etc. during regular vehicle maintenance. Such filler caps include: an oil filler cap 21; an engine oil dipstick 22; a brake fluid reservoir filler cap 23; a radiator header tank coolant filler cap 24; a power steering fluid filler cap 25 and a screen-wash tank filler cap 26. During vehicle maintenance, any or all of these filler caps may need to be removed temporarily to inspect and replenish fluids as required. During this process, the vehicle user may be tempted to rest a filler cap on an upper surface of the trim elements 30, 40, the battery or fuse-box cover 50, or the radiator shrouds 60. However, due to the uneven shape of these surfaces, the filler cap may fall, resulting in the filler cap becoming lost, damaged or more likely, contaminated by dust or dirt. Such contamination may be transferred to the engine which the filler cap is intended to seal when the filler cap is replaced. Such contamination may lead to permanent damage to the engine.

The present invention seeks to address these known problems by providing the user with a convenient designated place to set the filler cap down during maintenance. In the following Figures, like numerals are used to represent like components.

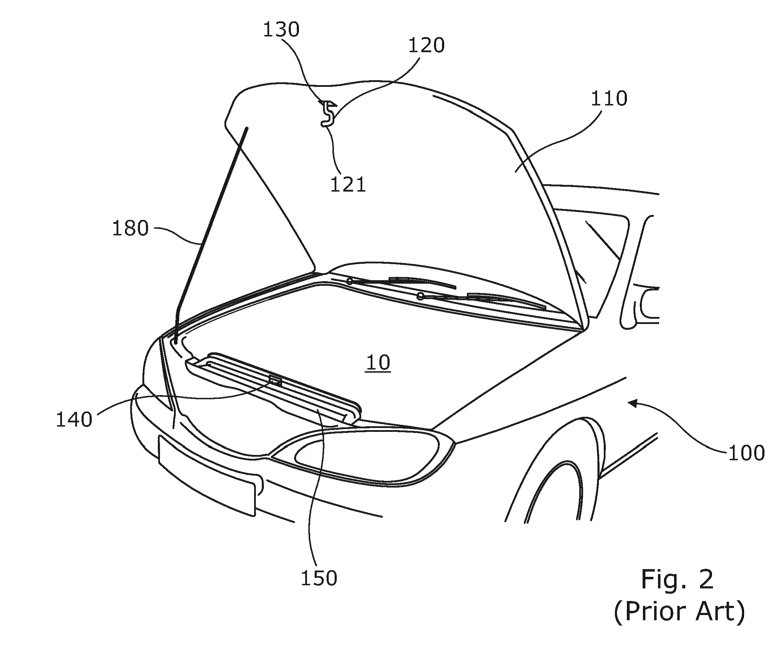

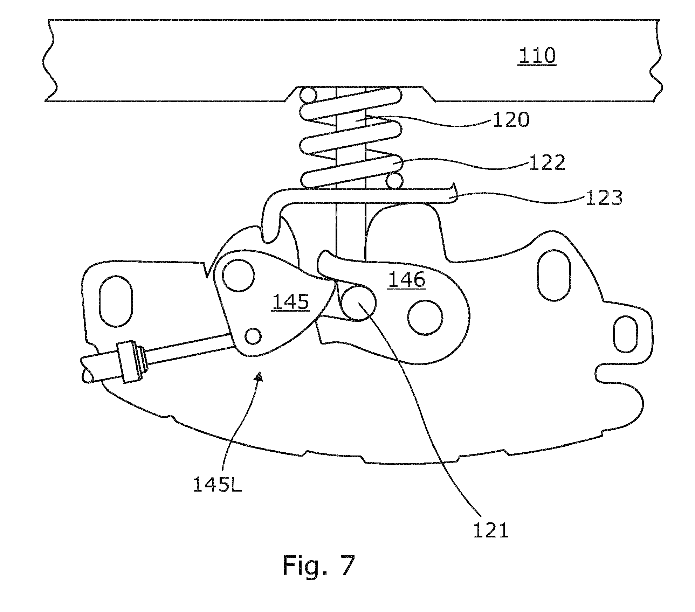

**Figure 2** shows an engine compartment 10 of a vehicle 100, seen from one side, to introduce further components relevant to the invention. In particular, bonnet 110 is shown in this view, with a striker 120 affixed to a striker plate 130 mounted on the underside of the bonnet. It will be noted that the striker 120 is formed in a hook-like shape, with a generally rod-shaped end piece 121 pointing forward at its lower end. Striker 120 is shown in simplified form; further detail is shown in Figure 7. A corresponding bonnet catch plate 140 is mounted on the panel 150 across the front of the engine bay 10, which is commonly known as a slam panel, and made of pressed steel. Numeral 180 represents the bonnet prop, which is used to support the bonnet 110 in its open position during maintenance and inspection.

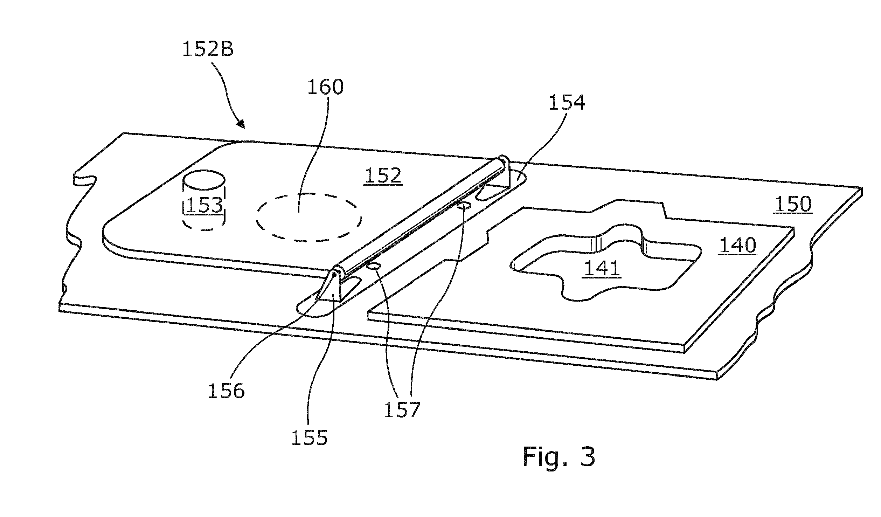

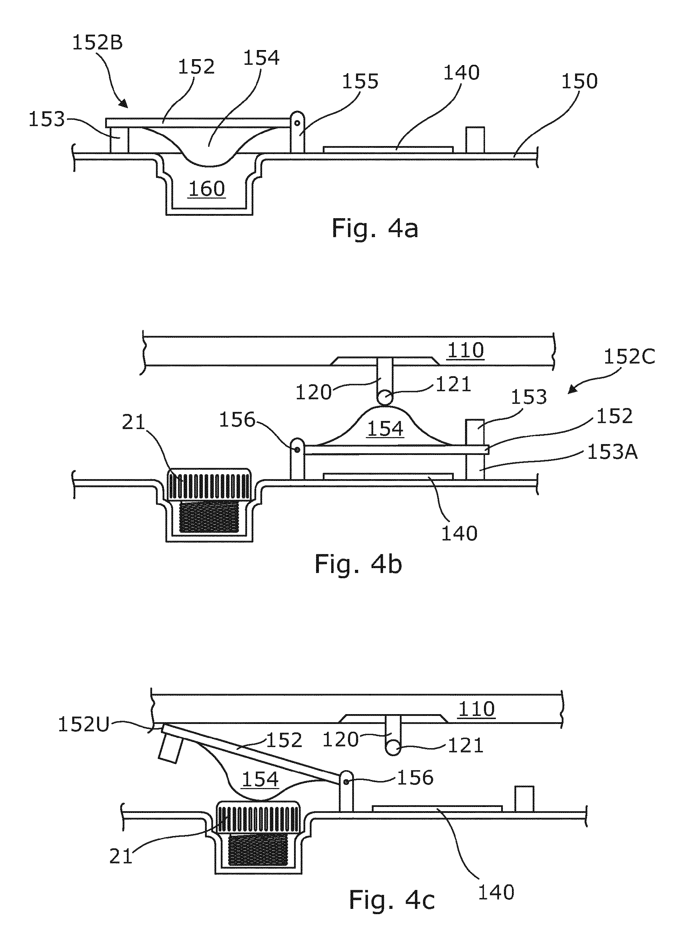

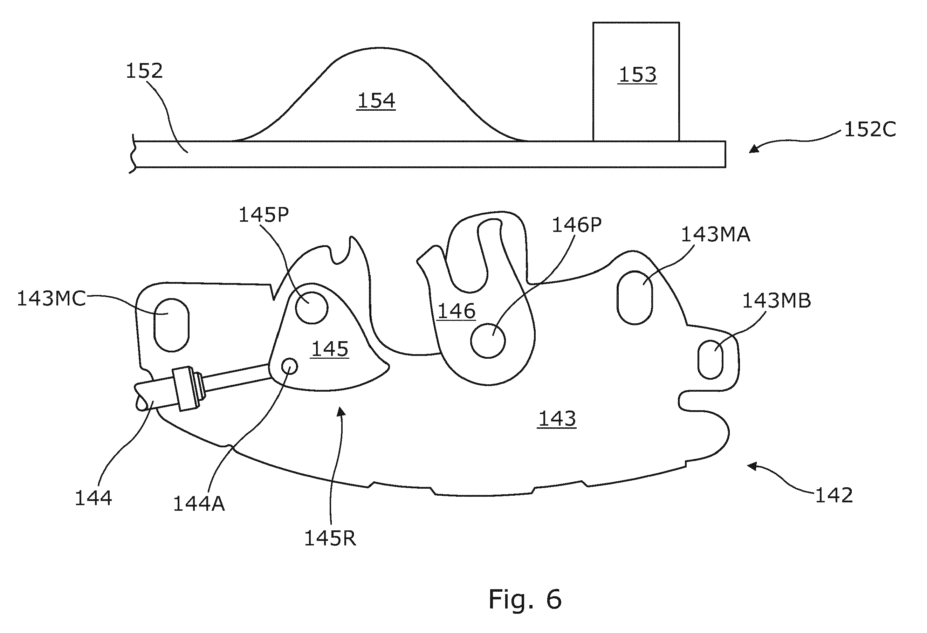

**Figure 3** shows a general perspective view of the slam panel 150 and bonnet catch plate 140, the latter incorporating a hole 141 in which a mechanism (shown in detail in Figures 6 and 7) is located to catch and hold striker 120. Cap holder cover 152 is shown in its panel or hatch closing position 152B. So long as cover 152 is in this position, bonnet 110 may be opened and closed in the conventional fashion. Cover 152 may be made of metal or plastic. In either case, a bump rubber 153 is affixed to cover 152 by any suitable means, to discourage rattling noises as the vehicle is driven. A sample mounting technique for cover 152 is shown, comprising a mounting plate 154, two pressed-out tabs 155, and a rod 156 passing through said tabs. It is anticipated that one end of cover 152 could be rolled or moulded around rod 156. Mounting plate 154 may be affixed to slam plate 150 by rivets or clips, shown at 157. Plate 152 is designed to rotate around rod 156, so that it may be moved to a position where it rests over bonnet catch plate 140, blocking hole 141, and preventing insertion of striker 120 into said hole (see Figure 4b). This prevents closure of the bonnet while the oil filler cap 21 (not shown) is held within its holder 160 (shown here in simplified ghosted outline below cover 152). On the other hand, it is clear from this Figure that the oil filler cap 21 cannot be inserted into its holder 160 while cover 152 is in its engine cover closing position 152B.

Figures 4a to 4c show how the filler cap holder is used. **Figure 4a** shows filler cap cover 152 in its engine cover closing position 152B. The bonnet 110 (not shown), or other engine cover, may be opened or closed freely; as is conventional in vehicles. A projection 154 (not shown in Figure 3 above, for clarity) is moulded into the lower side of cover 152, for reasons which will be explained shortly.

When oil filler cap 21 is removed from engine 20 for maintenance or inspection reasons, it is convenient for the vehicle operator to move cap holder cover 152 to its filler cap holding position 152C, as shown in Figure 4b; so that filler cap 21 can be rested as shown in filler cap holder 160. As filler cap holder 152 is flipped over to position 152C, it rests on bump rubber 153A; and projection 154 projects upwards. If the vehicle operator tries to close bonnet 110, striker rod 121 will hit projection 154, and the bonnet will be prevented from closing. It will clearly be advantageous for projection 154, at least, to be a frangible or deformable plastic part, which can be sacrificially damaged; but easily replaced. It is also clear that bump rubber 153A will act to minimize deformation of cover 152 if bonnet 110 is brought down in this position of cover 152.

**Figure 4c** shows a third position of filler cap cover 152. This is not a design intent, but may occur through operator carelessness. In this case, cover 152 is not in either of its design intent positions 152B or 152C; but its design is foolproof. Projection 154 strikes filler cap 21, which forces cover 152 to rest at an angle, so that its upper end 152U will be substantially elevated. (compare the angle of cover 152 with its horizontal position in Figure 4a, where there is no oil filler cap 21 in holder 160). The position of upper end 152U will prevent closure of bonnet 110, as shown in the Figure. Alternatively or additionally, an over-centre mechanism may be incorporated into hinge 156 for cover 152, so that it is biased into one of its two operating positions 152B or 152C.

The expected series of events during engine inspection is as follows: the user removes the oil filler cap 21 from the engine, then flips cap holder cover 152 from its panel or hatch closing position 152B as shown in Figure 4a to its filler cap holding position 152C in Figure 4b. This action provides a convenient place (holder 160) to rest oil filler cap 21. The filler cap holding position 152C is arranged to prevent closure of the bonnet or other engine cover until the oil filler cap 21 has been removed from its holder 160, and the cap holder cover 152 has been returned to the panel or hatch closing position 152B shown in Figure 4a. The user is thus reminded to return oil filler cap 21 to its operational location on the engine cover before the bonnet is closed, minimizing the inconvenience of forgetting to replace said cap.

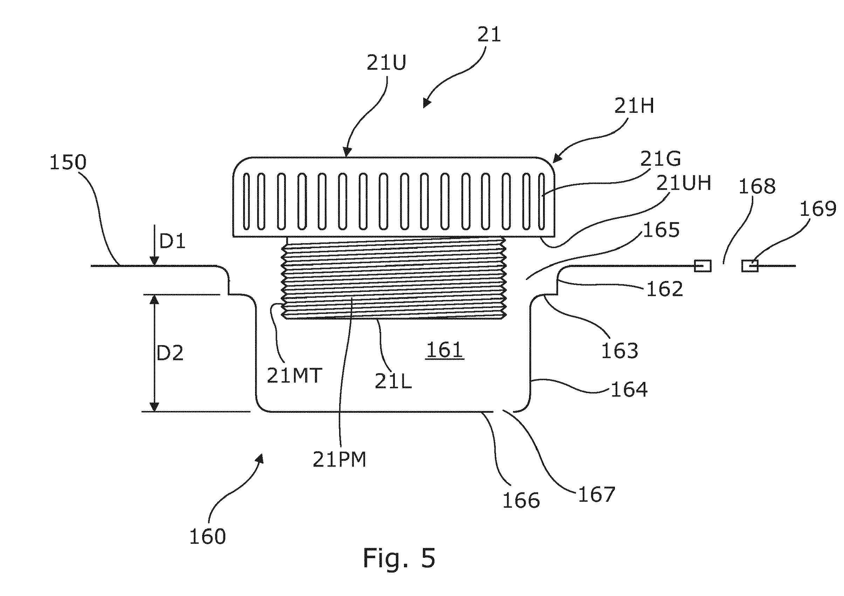

**Figure 5** shows an example of a filler cap holder 160 according to an aspect of the present invention. In the Figure, the holder 160 is shown as being pressed out of slam panel 150, having a generally cup-like depression 161 with substantially concentrically aligned circular sidewalls 162, 164 separated by a step 163. The Figure shows a filler cap 21 being positioned so as to be temporarily held by the holder 160. Filler cap 21 comprises an upper end 21 U and a lower end 21 L. Filler cap 21 is arranged to be secured to an orifice such as an oil-filler aperture of an engine by means of a threaded plugging member 21 PM formed in the lower end 21 L of the filler cap 21, and comprising a male thread 21 MT. The upper end 21 U of the filler cap 21 is provided with a handle portion 21 H having a gripping surface 21 G arranged around its perimeter to facilitate loosening and tightening of said cap.

The sidewalls 162, 164, are arranged concentrically to provide the cup-like depression 161 with an opening 165 configured to accommodate at least a part of the filler cap 21 in use. The sidewalls in the example shown are provided by a first diameter sidewall 162 adjacent said opening 165, and joined by step 163 to a second, smaller diameter sidewall 164. In the example shown, the sidewalls 162, 164 are substantially cylindrical in shape; and are terminated by a base region or bottom face 166 distal from the opening 165. This arrangement allows the slam panel 150 in which the holder 160 is formed to be made as a unitary pressed part. (It may, however, be found convenient to mould cap holder 160 as a separate plastic moulding, assembled to slam panel 150 with clips (not shown)). It is envisaged that at least a portion of the sidewalls 162, 164 may be tapered to facilitate removal of the completed part from a press or moulding tool, and to act as a funnel or guide for insertion of the filler cap 21. The tapering of the sidewalls 162, 164 would also align the filler cap 21 concentrically within the cup-like depression 161.

The step 163 is formed by the difference in diameters between the sidewalls 162, 164; and is arranged to abut and support an underside region 21 UH of the handle portion 21 H concentrically within the holder 160 in use. This prevents contact between the holder 160 and the plugging member 21 PM. The depth D1 of sidewall 162 is selected to leave a sufficient amount of gripping portion 21 G exposed above the slam panel 150 to facilitate the user removing filler cap 21 from the holder 160. Step 163 may slope downwards towards base region 166 to centre filler cap 21 on insertion, and for ease of manufacturing (pressing) slam panel 150.

The distance D2 between the step 163 and the bottom face 166 is arranged to be greater than the length of the longest plugging member 21 PM intended to be accommodated within the cup-like depression 161 of holder 160. In this way, there is no chance that the lower end 21 L of the filler cap 21 can come into contact with any contaminants that may have fallen into the cup-like depression 161 of the holder 160.

It may be seen from Figure 5 that the diameter of the first sidewall 162 is arranged to be slightly larger than that of the external diameter of the gripping surface 21 G and handle portion 21 H of the filler cap 21. This ensures that the filler cap 21 fits easily into the holder 160; and that the size and shape of the holder 160 serves to indicate to the user in an intuitive way, the intended purpose of the cup-like depression 161. The second sidewall 164 is generally arranged concentrically with the first sidewall 162. Its diameter is arranged to be significantly larger than the external diameter of the plugging member 21 PM, but smaller than that of the handle portion 21 H. In this way, no matter how the user inserts the filler cap 21 into the holder 160, the possibility of the surface of the plugging member 21 PM coming into direct contact with the interior surface of the second sidewall 164 is minimised.

In the example shown in the Figure, a drainage hole 167 is formed in the bottom face 166 of holder 160. This drainage hole is arranged to prevent or at least manage the accumulation of water etc. within the holder 160. Furthermore, a hole for holding a dipstick is indicated at 168; the holder for the dipstick typically comprising a grommet 169 which is assembled into slam panel 150.

**Figures 6** and 7 show the operation of the bonnet lock mechanism, generally indicated at 142; which was omitted from Figure 3 for clarity. The lock mechanism comprises a base plate 143, fixed to the vehicle by fasteners (not shown) assembled through mountings 143MA, 143MB, and 143MC. A bonnet release cable 144 has an outer cable mounted to base plate 143 and an inner cable attached at anchor 144A to a primary lock pivot 145; which in turn is pivotably mounted at pin 145P. In Figure 6, the bonnet release cable has been pulled, causing lock pivot 145 to rotate around pin 145P to release position 145R. This in turn allows primary lock catch 146 to rotate around its pivot pin 146P to release the bonnet striker 120. Cable 144 has a return spring (not shown) which pulls the cable back after the bonnet release lever is released by the user; pivot 145 is shown in its momentary "release of bonnet" position 145R for clarity. Lock catch 146 is swung upwards during bonnet opening by a spring (not shown) coiled around its pivot pin 146P.

In Figure 6, filler cap holder cover 152 is shown in its filler cap holder position 152C. It can be seen that it will not be possible to close the bonnet or engine cover until this cover is moved, as it blocks access from above to lock catch 146.

In **Figure 7****,** the bonnet lock mechanism is shown in its "bonnet locked down" position. Striker 120 is affixed to bonnet 110 with a coil spring 122 and a lock plate 123 by fasteners (not shown). After removing oil filler cap 21 from holder 160, holder cover 152 (not shown in this Figure) may be pivoted into position 152B over the holder 160 (Figure 4a), so that bonnet 110 can be closed. Striker end piece 121 descends until it strikes lock catch 146 and rotates it anticlockwise (as seen in the Figure), against the spring around pivot pin 146P. This rotation continues until lock catch 146 and lock pivot 145 are locked together as shown. Coil spring 122 holds bonnet 110 under tension, so that it does not shake visibly as the vehicle is driven.

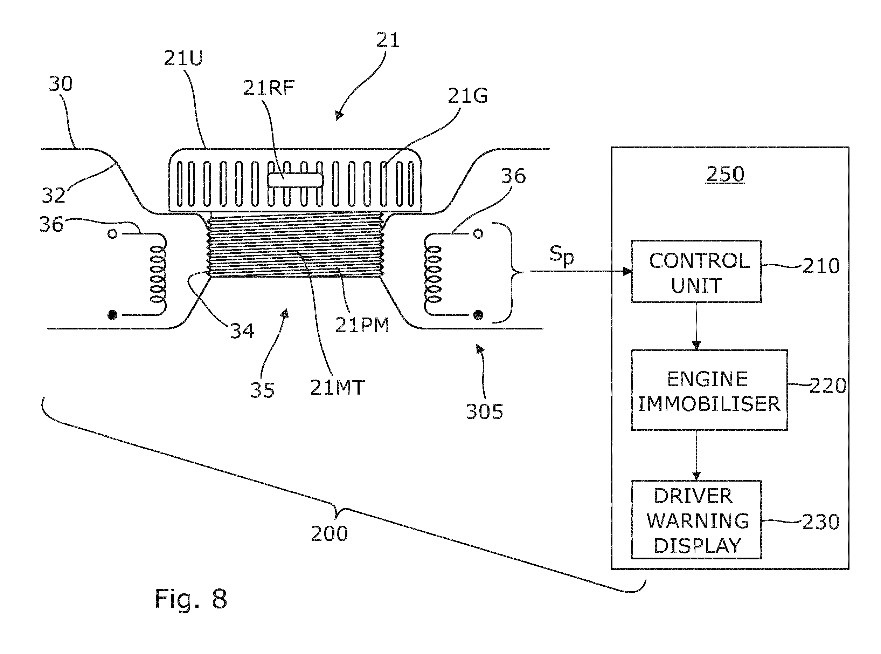

Although it is preferred that vehicle bonnet 110 cannot be closed until the filler cap 21 is returned to the engine, there may be occasions when the engine is run before the bonnet is closed (for example, to fill a newly-fitted oil filter after an oil change, but before a final check on the oil level). As an additional safeguard, it is envisaged that filler cap 21 may be integrated into a vehicle system (200, shown in Figure 8), whereby an interlock function is provided to prevent inadvertent starting of the engine when the filler cap 21 is located in the holder 160, or indeed anywhere other than plugging an opening on the engine.

Figure 8 shows a preferred embodiment of an engine cover 30, with an opening 35 which is plugged by an oil cap 21, similar to the cap shown in Figure 5 and integrated into a system 200 according to an aspect of the present invention. The system 200 comprises an opening 35 with a female thread 34 arranged to mate with male thread 21 MT on the plugging member 21 PM of filler cap 21. It can be seen from the Figure, that a recess 32 is moulded into engine cover 30, to allow the cap 21 to be screwed into the cover so that its upper face 21 U is flush with the surface of engine cover 30. Recess 32 allows room for the user's hand to grip cap portion 21 G for installation or removal of cap 21. When filler cap 21 is screwed into place as shown, the top of the engine is effectively sealed against oil leakage. To encourage this desirable situation, an RFID sensor 21 RF is mounted on the gripping portion 21 G of cap 21. Sensor 21 RF communicates with an antenna 36 (preferably moulded into the engine cover 30 as sensor 30S), which sends a signal S_{P} to control unit 210 in control means 250. In the condition shown, signal S_{P} confirms the presence of the filler cap, so that engine immobilizer 220 and driver warning display 230 are inactive. If, however, an attempt is made to start engine 20 when cap 21 is missing, immobilizer 220 will not allow engine starting, and driver warning display 230 will display a suitable message, such as "engine filler cap missing".

This warning and control system may be applied to as many, or as few, filler caps as is deemed appropriate. Where several filler caps have this system, they may be wired in series. Control means 250 comprises control unit 210, engine immobilizer 220, and driver warning display 230. It should be noted that antenna 36 is shown in section; and in practice would form a coil around opening 35. It will be appreciated that an RFID tag is a cost effective way to determine the presence of a plastic filler cap; but if a metallic filler cap is to be detected, a simple coil or Hall effect sensor may be used as the sensing means.

The present invention provides a vehicle or engine user with a designated location in which to temporarily store a filler cap 21 during engine maintenance or inspection and, whilst the filler cap is in this designated location, prevents closure of a bonnet or engine cover until the filler cap 21 is replaced correctly. The present invention thus reduces the risk of the filler cap 21 being placed in a position where it may become contaminated by dirt, damaged, or lost when a closure such as a bonnet is closed before the filler cap 21 is replaced. It also reduces the chance of unplanned oil loss from an engine, which could result in permanent engine damage. It is envisaged that the present invention may be used for filler caps for engine or transmission lubricants, hydraulic fluid reservoirs for power assisted steering or braking systems, windscreen washer bottles, coolant header tanks, and for electrolyte reservoirs. It is also envisaged that the interlock function may be employed to prevent the closure of a vehicle bonnet until the filler cap is replaced correctly. This prevents the user from inadvertently obscuring the hole into which the filler cap should be replaced before ensuring the filler cap is secured correctly. The use of an RFID tag and coil sensor may also be adapted for use with fuel tank filler caps.

Where a cap holder cover is integrated into a vehicle slam panel, the holder may be arranged so that the strength of the sidewalls of the cup-like depression are tuned to provide an energy absorbing structure in the upper frontal structure of the vehicle in the event of an impact with a pedestrian. It is envisaged that a metallic cap holder cover may be deformable; and that a plastic cap holder cover may be deformable or frangible, in order to absorb energy and to protect the pedestrian. Such deformability is also desirable to minimize damage to the bonnet striker if it is inadvertently brought down onto a filler cap holder cover in the filler cap holder position. Indeed, a plastic filler cap holder cover may be regarded as a sacrificial part; and may be designed to be readily replaceable in case of such accidental conflicts.

Other advantages will be apparent to one skilled in the art, and the present examples and embodiments are to be considered illustrative and not restrictive. The invention is not to be limited to the details given herein, but may be modified within the scope and equivalence of the appended claims. In particular, cap holder 160 and its cover 152 may be located adjacent to bonnet prop 180, rather than bonnet catch 142.

## Claims

1. An engine protection system (200) comprising:
a holder (160) for an engine filler cap (21);
said holder (160) being accessible through an engine maintenance panel or hatch (110) which is opened for maintenance and closed for engine running;
said holder (160) having a cover (152) discrete from said panel or hatch (110);
said holder cover (152) having at least two discrete operating positions comprising a filler cap holding position (152C) and a panel or hatch closing position (152B);
wherein the panel or hatch (110) is prevented from closing while the filler cap (21) is located in said holder (160).

2. An engine protection system (200) according to claim 1, wherein said filler cap (21) is prevented from being located in the cap holder (160) when said holder cover (152) is located in the panel or hatch closing position (152B).

3. An engine protection system (200) according to claim 1 or claim 2, wherein said engine maintenance panel or hatch (110) is a vehicle bonnet or engine cover.

4. An engine protection system (200) according to claim 1 or claim 2, wherein said engine maintenance panel or hatch (110) is an additional panel, discrete from a separate vehicle bonnet or engine cover.

5. An engine protection system (200) according to claim 3, further comprising a bonnet catch assembly (142).

6. An engine protection system (200) according to any preceding claim, wherein the system further comprises an engine cover (30) with a sensor (30S) mounted therein; and the filler cap (21) also comprises a sensor (21 RF), the sensors operating in combination to provide a warning signal when said filler cap (21) is not located in said engine cover (30).

7. An engine protection system (200) according to any preceding claim, further comprising a holder (168) for an engine dipstick (22).

8. An engine protection system (200) according to claim 7, wherein the system comprises an engine cover (30) with a location for insertion of a dipstick (22), with a sensor mounted therein; and the dipstick (22) also comprises a sensor, the sensors operating in combination to provide a warning signal when the dipstick (22) is not located in said engine cover (30).

9. An engine protection system (200) according to claim 6 or claim 8, further comprising a remote operator display panel (230) which provides a visible and/or audible warning when signal(s) (Sp) indicate that the filler cap (21) and/or dipstick (22) are not located on or in the engine cover (30).

10. An engine protection system (200) according to claim 9, further comprising a starter motor interrupt circuit, so that a starter motor for an engine (20) protected by said system is not permitted to activate when signal(s) (Sp) indicate that the filler cap (21) and/or dipstick (22) are not located on or in the engine.

11. An engine protection system (200) according to any one of claims 1 to 10, where said holder cover (152) is at least partly made of plastic, said plastic part being readily replaceable.

12. An engine protection system (200) according to any preceding claim, wherein the filler cap holder (160) is arranged so that the filler cap (21) is held at substantially the same orientation as if it was located on the engine (20).

13. An engine protection system (200) according to any preceding claim, further comprising a filler cap (21) having a handle portion (21 H) and a plugging member (21 PM), the holder (160) comprising a generally cup-like depression (161) arranged to support the handle portion (21 H) so as to prevent contact between the holder (160) and said plugging member (21 PM).

14. An engine (20) fitted with an engine protection system (200) according to any preceding claim.

15. A vehicle (100) fitted with an engine (20) according to claim 17.
